# EUROPEAN PATENT SPECIFICATION

(11) **EP 3 597 982 B1**
(45) Date of publication and mention of the grant of the patent: **02.03.2022**
(21) Application number: 18767193.8
(22) Date of filing: 13.03.2018
(51) Int. Cl.: F16M 11/04, F16M 11/16

(54) **PAN-TILT QUICK LOCKING DEVICE**
SCHWENK-NEIGE-SCHNELLVERSCHLUSSVORRICHTUNG
DISPOSITIF DE VERROUILLAGE RAPIDE PANORAMIQUE-INCLINABLE

(30) Priority: 13.03.2017 CN 201710146036
(43) Date of publication of application: 22.01.2020
(73) Proprietor: GDU-Tech Co., Ltd., Shenzhen, Guangdong 518000 (CN)
(72) Inventor: HUANG, Li, Hubei 430070 (CN); JIE, Shuqin, Hubei 430070 (CN); TU, Yongyi, Hubei 430070 (CN); WANG, Xiaojie, Hubei 430070 (CN); GU, Xing, Hubei 430070 (CN); LIU, Huabin, Hubei 430070 (CN)
(74) Representative: Cabinet Chaillot
(86) International application number: PCT/CN2018/078807
(87) International publication number: WO 2018/166435

(56) References cited:
- EP-A2- 1 912 015
- WO-A1-2013/158057
- WO-A1-2016/004567
- WO-A1-2016/178157
- CN-A- 104 704 279
- CN-A- 105 517 647
- CN-A- 106 931 284
- CN-U- 202 720 439
- CN-U- 203 927 280
- CN-U- 206 637 195
- GB-A- 385 989
- US-A- 4 840 338
- US-A- 5 870 642
- US-A1- 2015 122 851
- US-B1- 6 970 202

## Description

### FIELD OF THE INVENTION

The invention relates to the technical field of pan-tilt heads, and particularly to a pan-tilt quick locking device.

### BACKGROUND OF THE INVENTION

A pan-tilt head is mounted on a carrier as a supporting device for mounting and fixing an electrical device such as a video camera, and is widely used in the fields of photography, monitoring and the like. In the application field of unmanned air vehicle (UVA) technologies, a pan-tilt head is usually fixed on the body of a UAV as a carrier, and photographing devices (such as a camera and a video camera) for aerial photography are mounted through the pan-tilt head to acquire a specific type of environmental information (such as remote sensing images). At present, the pan-tilt head is mostly fixed on the UAV by a pan-tilt quick locking device, see US 2015/122851 A1, US 6 970 202 B1, WO 2013/158057 A1, EP 1 912 015 A2. However, US 2015/122851 A1, US 6 970 202 B1, WO 2013/158057 A1, EP 1 912 015 A2 all only disclose that electronic equipments for shooting could be locked quickly after being installed, which is convenient for installation and avoids image jitter during rotation shooting.

Pan-tilt quick locking devices are widely used in the field of photography, and currently designed based on the principle of an eccentric wheel in most cases. With the continuous development of technology, the photographing instruments have gradually become smaller and lighter. The original eccentric devices have been replaced due to their complicated mechanism larger volume and large operating space.

US 2015/122851 A1 is about a rotating mechanism for a computer or similar device. US 6 970 202 B1 is about a device for mounting a tethered camera on a portable computer. WO 2013/158057 A1 is about a rotating mechanism for a computer or similar device. EP 1 912 015 A2 is about a methods and systems for attaching and detaching a payload device to and from, respectively,a gimbal system without requiring use of a mechanical tool.

### SUMMARY OF THE INVENTION

### Technical Problem

An object of the invention is to provide a pan-tilt quick locking device which is structurally compact, has a small volume, can operate in a relatively small space, is simple to operate overall, and is convenient to use.

### Solution to Problem

### Technical Solution

To solve the above technical problems, the invention provides a pan-tilt quick locking device, comprising a locking ring and a pan-tilt connecting device capable of generating relative forward and backward sliding with the locking ring along an inner cavity of the locking ring via a slide rail mechanism, and the pan-tilt connecting device locking the pan-tilt connecting device or loosening the pan-tilt connecting device via the relative sliding in the inner cavity of the locking ring, characterized in that the pan-tilt connecting device comprises a positioning ring and a pan-tilt connecting member for connecting a pan-tilt head, and the pan-tilt connecting member is located below the positioning ring and disposed coaxially with the positioning ring; and the locking ring comprises an annular locking ring body, and an upper surface of the locking ring body extends upward along an inner cavity wall thereof to form a first annular surrounding plate.

Preferably, the slide rail mechanism is a concave-convex mating structure which is disposed on an outer side wall of the pan-tilt connecting member and an inner side wall of the locking ring and capable of generating relative sliding.

Preferably, the slide rail mechanism comprises at least one first raised bar disposed on the outer side wall of the pan-tilt connecting member and at least one second raised bar disposed on the inner side wall of the locking ring, and the first raised bar is located above the second raised bar and capable of generating relative sliding with the second raised bar.

Preferably, an annular boss located above the first raised bar is disposed at a lower end of an outer edge of the positioning ring.

Preferably, the pan-tilt quick locking device further comprises a locking mechanism which comprises a first positioning hole disposed on a side wall of the locking ring, a first elastic positioning member located in the first positioning hole, and a sliding slot, a first positioning slot and a second positioning slot disposed on a side wall of the positioning ring in a relative sliding direction, and the first positioning slot and the second positioning slot are respectively located at both sides of the sliding slot; and one end of the first elastic positioning member extends into the sliding slot, and can slide into the first positioning slot or the second positioning slot along the sliding slot, thereby locking the pan-tilt connecting member or loosening the pan-tilt connecting member.

Preferably, the pan-tilt quick locking device further comprises a locking mechanism which comprises a second elastic positioning member fixed to the upper surface of the locking ring, and the second elastic member passes through the locking ring and abuts against the positioning ring.

Preferably, the second elastic positioning member is formed by connecting a positioning member body to V-shaped bent portions located at front and rear ends of the positioning member body; and portions of the locking ring corresponding to the positions of the V-shaped bent portions at the front and rear ends of the positioning member body are provided with first grooves through which the V-shaped bent portions pass; and
when the pan-tilt connecting member is locked, tips of the V-shaped bent portions pass through the locking ring and abut against the positioning ring.

Preferably, portions of the positioning ring corresponding to the first grooves are provided with second grooves, and when the pan-tilt connecting member is locked, the tips of the V-shaped bent portions pass through the locking ring and abut against the corresponding second grooves on the positioning ring.

Preferably, a third groove is further disposed between the two second grooves on the same side; and
when the pan-tilt connecting device is loosened from the locking ring, one of the V-shaped bent portions of each said second elastic positioning member abuts against the corresponding third groove on the positioning ring, and the other V-shaped bent portion thereof is suspended.

Preferably, the pan-tilt quick locking device further comprises a fixing plate disposed above the locking ring and connected to the positioning ring; the inner cavity wall of the locking ring is upwardly provided with a first annular surrounding plate, and an open slot is disposed at an upper end of the annular surrounding plate; and a lower surface of the fixing plate is provided with a positioning boss which corresponds to the position of the open slot and can slide along the open slot.

Preferably, a pull ring is disposed at a front side and/or a rear side of the locking ring, and the locking of the pan-tilt connecting member or the loosening of the pan-tilt connecting member is achieved by pulling the pull ring forward and backward.

Preferably, the pan-tilt connecting member is provided with a hollow inner cavity, and a rib connected to the positioning ring is extended inward on an inner cavity wall thereof.

### Advantageous Effects of Invention

### Advantageous Effects

By employing the above scheme, the pan-tilt quick locking device of the invention has the following advantageous effects:
1. through the above structural design, a slide rail mechanism is disposed between the locking ring and the pan-tilt connecting device, so that the pan-tilt connecting device slides forward and backward relative to the inner cavity of the locking ring, and moves via the locking mechanism to allow that the pan-tilt connecting device is placed at a limit position in the inner cavity of the locking ring, thereby enabling the locking and loosening of the pan-tilt connecting device in place;
2. by designing an open sliding slot formed by at least one second raised bar on the locking ring, at least one first boss is disposed on the pan-tilt connecting member by the concave-convex sliding fit and position limiting, so that the pan-tilt connecting member can move in the open sliding slot in the inner cavity of the locking ring, thereby locking and loosening a pan-tilt head in place;
3. through the designed locking mechanism structure, the locking device is structurally compact, and the connection position between the pan-tilt connecting member and the locking ring is flexibly positioned, so that the structure is simple, the operation is convenient and the application range of the product is greatly expanded.

### BRIEF DESCRIPTION OF THE DRAWINGS

FIG. 1 is a schematic perspective exploded structural view of Embodiment 1 of a pan-tilt quick locking device of the invention;
FIG. 2 is a schematic perspective cross-sectional structural view of a locking ring of Embodiment 1 of the pan-tilt quick locking device of the invention;
FIG. 3 is a schematic perspective structural view of a positioning ring of Embodiment 1 of the pan-tilt quick locking device of the invention;
FIG. 4 is a schematic perspective structural view of a pan-tilt connecting member of Embodiment 1 of the pan-tilt quick locking device of the invention;
FIG. 5 is a bottom schematic perspective cross-sectional structural view of Embodiment 1 of the pan-tilt quick locking device of the invention in a loosened state;
FIG. 6 is a bottom schematic perspective cross-sectional structural view of Embodiment 1 of the pan-tilt quick locking device of the invention in a locked state;
FIG. 7 is a schematic perspective exploded structural view of Embodiment 2 of the pan-tilt quick locking device of the invention;
FIG. 8 is a schematic structural view of a fixing plate of Embodiment 2 of the pan-tilt quick locking device of the invention;
FIG. 9 is a schematic perspective exploded structural view of Embodiment 3 of the pan-tilt quick locking device of the invention;
FIG. 10 is a schematic perspective structural view of Embodiment 3 of the pan-tilt quick locking device (excluding a locking ring) of the invention in a loosened state;
FIG. 11 is a schematic perspective structural view of Embodiment 3 of the pan-tilt quick locking device of the invention (comprising the locking ring) in a loosened state;
FIG. 12 is a schematic perspective structural view of Embodiment 3 of the pan-tilt quick locking device (excluding the locking ring) of the invention in a locked state; and
FIG. 13 is a schematic perspective structural view of Embodiment 3 of the pan-tilt quick locking device (comprising the locking ring) of the invention in a locked state.

### BEST MODES FOR CARRYING OUT THE INVENTION

The invention will be illustrated below according to the embodiments shown in the drawings. The disclosed embodiments can be considered in all aspects as illustrative and not limiting. The scope of the invention is not limited by the description of the following embodiments and only defined by the scope of the claims, and includes all variations having the same meaning as the scope of the claims and falling within the scope of the claims.

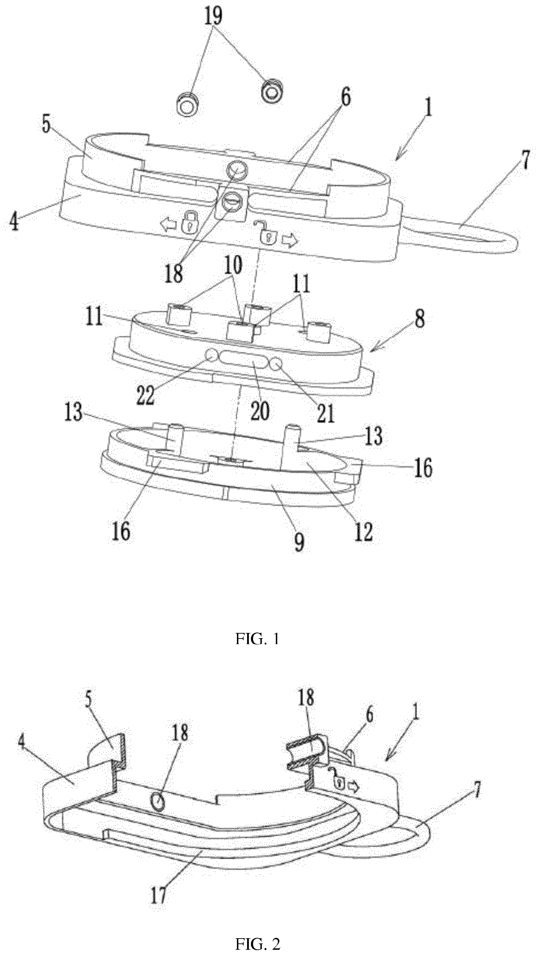

FIG. 1 shows a schematic perspective exploded structural view of Embodiment 1 of a pan-tilt quick locking device of the invention. The pan-tilt quick locking device comprises a locking ring 1 and a pan-tilt connecting device capable of generating relative forward and backward sliding with the locking ring 1 along an inner cavity of the locking ring 1 via a slide rail mechanism, and the pan-tilt connecting device generates relative sliding in the inner cavity of the locking ring 1 via a locking mechanism to lock the pan-tilt connecting device or loosen the pan-tilt connecting device.

As shown in FIG. 2, the locking ring 1 comprises a rectangular annular locking ring body 4, an upper surface of the locking ring body 4 extends upward along an inner cavity wall thereof to form a first annular surrounding plate 5, and two rectangular open slots 6 are symmetrically disposed at left and right sides of an upper end of the first surrounding plate 5. In this embodiment, a pull ring 7 is disposed at a front side of the locking ring body 4, a locking and loosening orientation indicating diagram is disposed on an outer side wall of the locking ring body 4, the pan-tilt connecting device can be loosened from the locking ring 1 when the locking ring 1 is pulled in the direction of the pull ring 7, and the pan-tilt connecting device can be locked with the locking ring 1 when the locking ring 1 is pushed away from the pull ring 7.

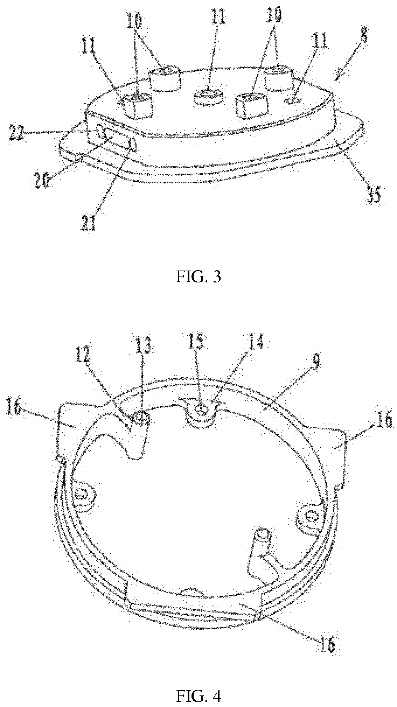

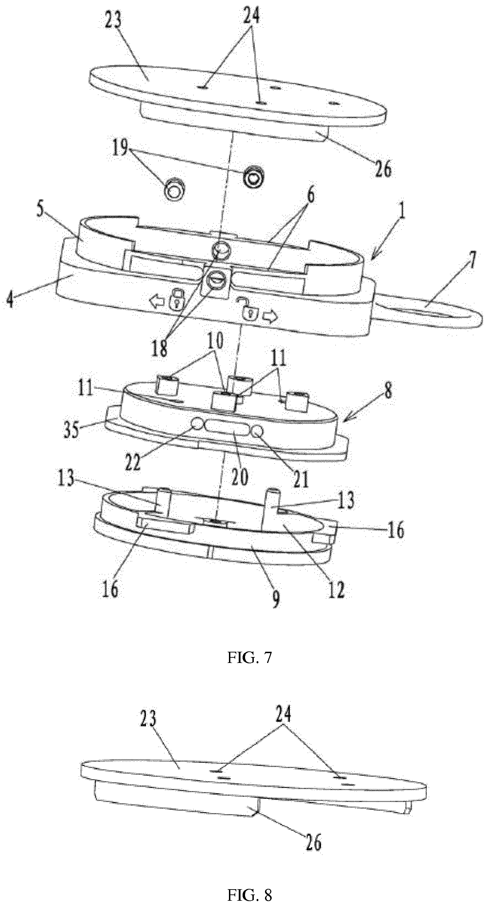

The pan-tilt connecting device comprises a positioning ring 8 and a pan-tilt connecting member 9 connected below the positioning ring 8, and as can be seen from FIGS. 1 and 7, the positioning ring 8 is disposed coaxially with the pan-tilt connecting member 9. As shown in FIG. 3, the positioning ring 8 is cover-shaped, an upper surface of the positioning ring 8 is provided with at least one first connecting hole 10 at the periphery near an outer edge portion thereof, four first connecting holes are disposed in this embodiment, a plurality of second connecting holes 11 are disposed among the four first connecting holes 10 on the upper surface of the positioning ring 8, and three second connecting holes are disposed in this embodiment.

As shown in FIG. 4, the pan-tilt connecting member 9 is annular and has a hollow inner cavity, two ribs 12 are symmetrically extended inward on an inner cavity wall of the pan-tilt connecting member 9, the two ribs 12 are respectively connected to connecting posts 13 perpendicular to the ribs 12, and the pan-tilt connecting member 9 is passed upward through the two second connecting holes 11 of the positioning ring 8 via the two connecting posts 13 and then connected to the positioning ring 8. A plurality of horizontal connecting plates 14 are circumferentially disposed on the inner cavity wall of the pan-tilt connecting member 9, and the connecting plates 14 are respectively provided with third connecting holes 15 for connecting a pan-tilt head.

The pan-tilt connecting member 9 generates relative forward and backward sliding on the inner cavity wall of the locking ring 1 via the slide rail mechanism, and the pan-tilt connecting member 9 locks the pan-tilt connecting device or loosens the pan-tilt connecting device via the locking mechanism during the sliding in the locking ring 1. The slide rail mechanism is a concave-convex mating structure which is disposed on an outer side wall of the pan-tilt connecting member 9 and an inner side wall of the locking ring 1 and capable of generating relative sliding. In another embodiment, the slide rail mechanism can further comprise at least one first raised bar 16 disposed on the outer side wall of the pan-tilt connecting member 9 and at least one second raised bar 17 disposed on the inner side wall of the locking ring 1, and the first raised bar 16 is located above the second raised bar 17 and capable of generating relative sliding with the second raised bar 17; and specifically, in this embodiment, three first raised bars 16 are disposed and one second raised bar 17 is disposed, wherein two of the first raised bars 16 are symmetrically disposed at front parts of left and right sides of an outer surface of the pan-tilt connecting member 9, and the third first raised bar 16 is disposed at a front side of the outer surface of the pan-tilt connecting member 9. The pan-tilt connecting member 9 slides over the second raised bar 17 of the locking ring 1 via the three first raised bars 16. An annular boss 35 is disposed around a lower end of an outer edge of the positioning ring 8, and the annular boss 35 and the three first raised bars 16 are disposed above and below, i.e. the annular boss 35 is located above the first raised bars 16. When the three first raised bars 16 of the pan-tilt connecting member 9 slide out of the second raised bar 17, the annular boss 35 is slidably disposed on an upper surface of the second raised bar 17.

The pan-tilt quick locking device further comprises a locking mechanism which comprises two first positioning holes 18 symmetrically disposed on left and right side walls of the first surrounding plate 5, two first elastic positioning members 19 located in the two first positioning holes 18, and sliding slots 20, first positioning slots 21 and second positioning slots 22 disposed on left and right side walls of the positioning ring 8 in a relative forward and backward sliding direction. Respective ends of the two first elastic positioning members 19 pass through the first positioning holes 18 and then respectively extend into the two sliding slots 20, first circular positioning slots 21 and second circular positioning slots 22 are respectively disposed at front and rear sides of the sliding slots 20, and during the relative sliding between the locking ring 1 and the positioning ring 8, the two elastic positioning members 19 can slide into the first positioning slots 21 or the second positioning slots 22 along the sliding slots 20, thereby locking the pan-tilt connecting member 9 or loosening the pan-tilt connecting member 9.

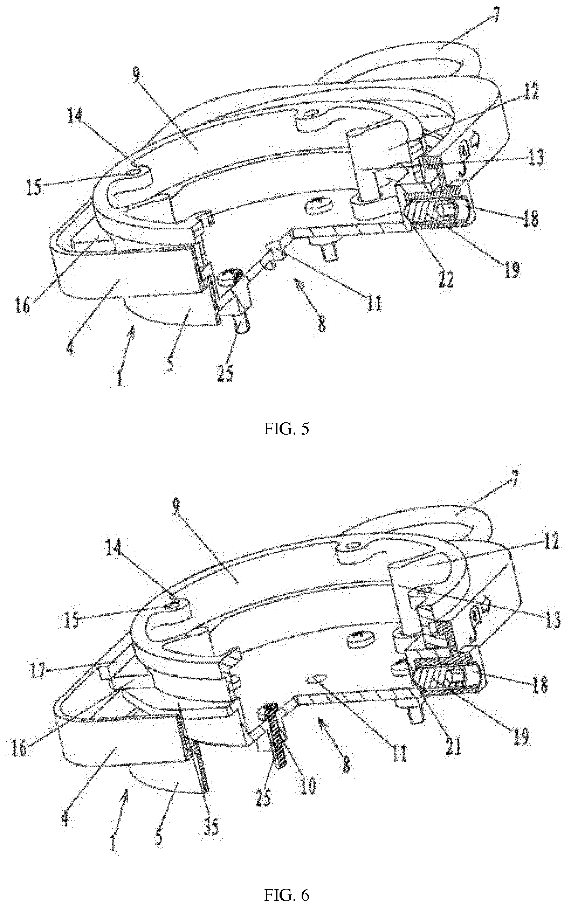

During use, when the pan-tilt connecting device needs to be loosened from the locking ring 1, as shown in FIG. 5, the pull ring 7 is pulled in the direction of the pull ring 7, then the first raised bars 16 on the pan-tilt connecting member 9 of the pan-tilt connecting device relatively slide forward along the second raised bar 17 in the inner cavity of the locking ring 1, and when the first elastic positioning members 19 relatively slide to the first positioning slots 21 along the sliding slots 20, the first raised bars 16 and the second raised bar 17 are completely staggered, the pan-tilt connecting device formed by connecting the positioning ring 8 to the pan-tilt connecting member 9 is placed at a loosening end of the locking ring 1, and the pan-tilt connecting member 9 can freely slide out of the locking ring 1, thus enabling the rapid separation of a pan-tilt load; and when the pan-tilt connecting device needs to be locked with the locking ring 1, as shown in FIG. 6, the pull ring 7 is pushed away from the pull ring 7, then the first raised bars 16 on the pan-tilt connecting member 9 of the pan-tilt connecting device relatively slide backward along the second raised bar 17 in the inner cavity of the locking ring 1, and when the first elastic positioning members 19 slide to the second positioning slots 22 along the sliding slots 20, the first raised bars 16 are located above the second raised bar 17, the pan-tilt connecting device formed by connecting the positioning ring 8 to the pan-tilt connecting member 9 is placed at a locking end of the locking ring 1 to lock the pan-tilt connecting device, and then sides of the pan-tilt connecting member 9 and the positioning ring 8 are in the sliding slots of the locking ring 1.

FIG. 7 shows a schematic perspective exploded structural view of Embodiment 2 of the pan-tilt quick locking device of the invention. The Embodiment 2 only differs from Embodiment 1 in that the pan-tilt quick locking device further comprises a fixing plate 23.

As shown in FIG. 8, the fixing plate 23 takes the shape of a circular plate; and the fixing plate 23 is disposed above the locking ring 1. The fixing plate 23 is provided with a plurality of third connecting holes 24, four third connecting holes are disposed in this embodiment, the four third connecting holes 24 and the four first connecting holes 10 on the positioning ring 8 are correspondingly positioned above and below, and the positioning ring 8 and the fixing plate 23 are connected together by passing through a plurality of the first connecting holes 10 and the four third connecting holes 24 via four bolts 25. Two positioning bosses 26 which correspond to the positions of the two open slots 6 of the locking ring 1 and can slide along the open slots 6 are symmetrically disposed at left and right sides of a lower surface of the fixing plate 23.

The locking and loosening working process between the pan-tilt connecting device and the locking ring 1 in this embodiment is mostly the same, and the same points are not described again. The difference is that, when the pan-tilt connecting device is locked with the locking ring 1, the two positioning bosses 26 of the fixing plate 23 are slidably disposed in the two open slots 6 of the locking ring 1 to enable locking in place, and when the pan-tilt connecting device is loosened from the locking ring 1, the two positioning bosses 26 of the fixing plate 23 slide out of the two open slots 6.

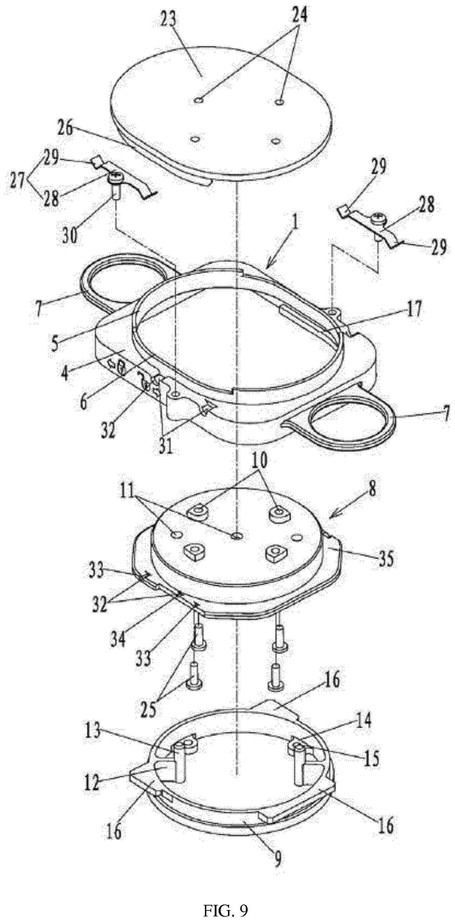

FIG. 9 shows a schematic perspective exploded structural view of Embodiment 3 of the pan-tilt quick locking device of the invention. This embodiment only differs from Embodiment 2 in that the locking mechanism comprises two second elastic positioning members 27 fixed at left and right sides of the upper surface of the locking ring body 4 of the locking ring 1, each of the elastic positioning members 27 is formed by connecting a positioning member body 28 to V-shaped bent portions 29 located at front and rear ends of the positioning member body 28, middle parts of left and right side walls of the locking ring body 4 respectively protrude outward to form bosses which are provided with screw holes penetrating upper and lower ends thereof, the positioning member body 28 is fixed to the upper surface of the locking ring 1 after passing through the screw hole via a bolt 30, portions at the left and right sides of the upper surface of the locking ring body 4 corresponding to the positions of the V-shaped bent portions 29 of the two elastic positioning members 27 are respectively provided with first V-shaped grooves 32, and portions of the first grooves 32 near an inner side of the locking ring body 4 are respectively provided with through holes 31.

Second V-shaped grooves 33 are disposed where left and right sides of the upper surface of the positioning ring 8 correspond to the four first V-shaped grooves 32, and a third V-shaped groove 34 is further disposed between the two second grooves 33 on the same side. When the pan-tilt connecting device is locked with the locking ring 1, and the two V-shaped bent portions 29 of each of the second elastic positioning members 27 are passed through the corresponding two through holes 31 and then pressed into the two second V-shaped grooves 33 on the same side of the positioning ring 8 to abut against the positioning ring 8.

When the pan-tilt connecting device is loosened from the locking ring 1, one of the V-shaped bent portions 29 of each of the second elastic positioning members 27 is respectively pressed into the corresponding third groove 34 at one side of the positioning ring 8, and the other V-shaped bent portion 29 thereof is suspended.

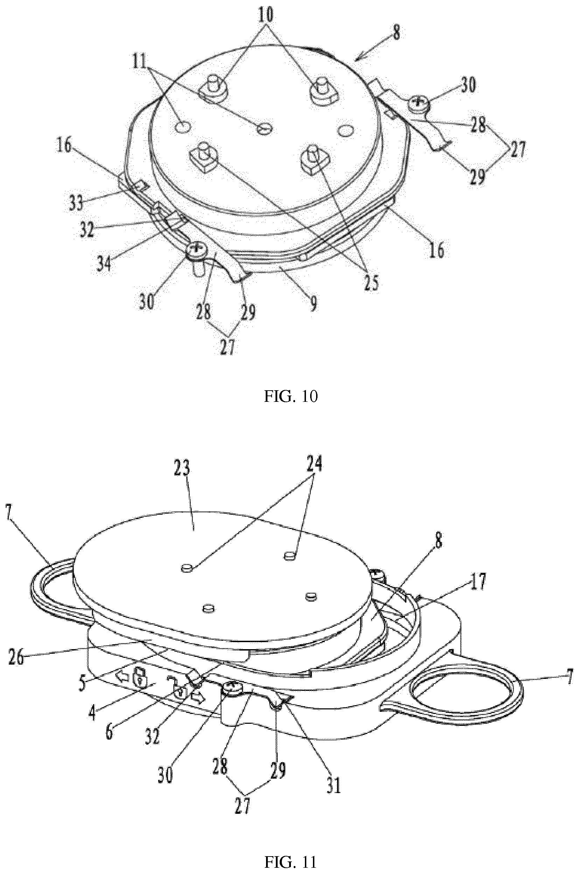

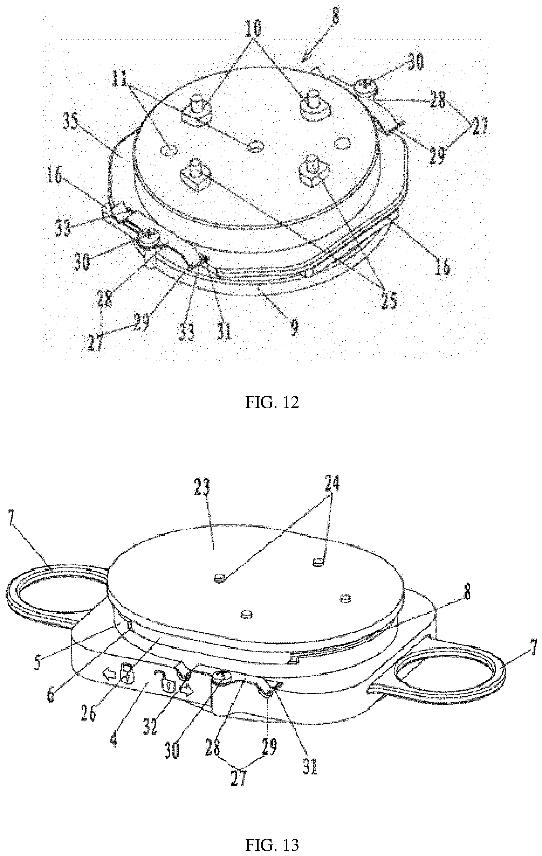

During use, when the pan-tilt connecting device needs to be loosened from the locking ring 1, as shown in FIGS. 10 and 11, the pull ring 7 is pulled in the direction of the pull ring 7, then the first raised bars 16 on the pan-tilt connecting member 9 of the pan-tilt connecting device relatively slide forward along the second raised bar 17 in the inner cavity of the locking ring 1, the two elastic positioning members 27 relatively slide forward along the locking ring 1, and when the two bent portions 29 of the elastic positioning member 27 are passed through the through holes 31 on the first grooves 32 and slide forward via the two second grooves 33 on the positioning ring 8 such that one of the V-shaped bent portions 29 is passed through the through hole 31 and slides into the third groove 34 at a front end and the other V-shaped bent portion is suspended, the pan-tilt connecting device formed by connecting the positioning ring 8 to the pan-tilt connecting member 9 is placed at a loosening end of the locking ring 1 to enable the loosening of the pan-tilt connecting device from the sliding slots, and the pan-tilt connecting member 9 can freely slide out of the locking ring 1, thus enabling the rapid separation of a pan-tilt load; and when the pan-tilt connecting device needs to be locked with the locking ring 1, as shown in FIGS. 12 and 13, the pull ring 7 is pushed away from the pull ring 7, then the first raised bars 16 on the pan-tilt connecting member 9 of the pan-tilt connecting device relatively slide backward along the second raised bar 17 in the inner cavity of the locking ring 1, the two elastic positioning members 27 slide backward along with the locking ring 1, and when the two bent portions 29 of the elastic positioning member 27 relatively slide backward such that the bent portion 29 which is located in the third groove 34 of the positioning ring 8 by passing through the through hole 31 of the first groove 32 and the other bent portion 29 which does not contact the positioning ring 8 due to its suspension after passing through the corresponding through hole 31 slide into the two second grooves 33 on the positioning ring 8, the pan-tilt connecting device formed by connecting the positioning ring 8 to the pan-tilt connecting member 9 is placed at a locking end of the locking ring 1 to enable the locking of the pan-tilt connecting device in the sliding slots, and then sides of the pan-tilt connecting member 9 and the positioning ring 8 are in the sliding slots of the locking ring.

It should be understood that the invention is not limited to the exact structures which have been described above and are shown in the accompanying drawings, and various modifications and changes may be made without departing from the scope of the invention. The scope of the invention is limited only by the appended claims.

## Claims

1. A pan-tilt quick locking device, comprising a locking ring (1) and a pan-tilt connecting device capable of generating relative forward and backward sliding with the locking ring (1) along an inner cavity of the locking ring (1) via a slide rail mechanism, and the pan-tilt connecting device locking the pan-tilt connecting device or loosening the pan-tilt connecting device via the relative sliding in the inner cavity of the locking ring (1),
**characterized in that**
the pan-tilt connecting device comprises a positioning ring (8) and a pan-tilt connecting member (9) for connecting a pan-tilt head, and the pan-tilt connecting member (9) is located below the positioning ring (8) and disposed coaxially with the positioning ring (8); and
the locking ring (1) comprises an annular locking ring body (4), and an upper surface of the locking ring body (4) extends upward along an inner cavity wall thereof to form a first annular surrounding plate (5).

2. The pan-tilt quick locking device according to claim 1, wherein the slide rail mechanism is a concave-convex mating structure which is disposed on an outer side wall of the pan-tilt connecting member (9) and an inner side wall of the locking ring (1) and capable of generating relative sliding.

3. The pan-tilt quick locking device according to claim 1, wherein the slide rail mechanism comprises at least one first raised bar (16) disposed on the outer side wall of the pan-tilt connecting member (9) and at least one second raised bar (17 disposed on the inner side wall of the locking ring (1), and the first raised bar (16) is located above the second raised bar (17) and capable of generating relative sliding with the second raised bar (17).

4. The pan-tilt quick locking device according to claim 3, wherein an annular boss (35) located above the first raised bar (16) is disposed at a lower end of an outer edge of the positioning ring (8).

5. The pan-tilt quick locking device according to claim 1, wherein the pan-tilt quick locking device further comprises a locking mechanism which comprises a first positioning hole (18) disposed on a side wall of the locking ring (1), a first elastic positioning member (19) located in the first positioning hole (18), and a sliding slot (20), a first positioning slot (21) and a second positioning slot (22) disposed on a side wall of the positioning ring (8) in a relative sliding direction, and the first positioning slot (21) and the second positioning slot (22) are respectively located at both sides of the sliding slot (20); and one end of the first elastic positioning member (19) extends into the sliding slot (20), and can slide into the first positioning slot (21) or the second positioning slot (22) along the sliding slot (20), thereby locking the pan-tilt connecting member (9) or loosening the pan-tilt connecting member (9).

6. The pan-tilt quick locking device according to claim 1, wherein the pan-tilt quick locking device further comprises a locking mechanism which comprises a second elastic positioning member (27) fixed to the upper surface of the locking ring (1), and the second elastic positioning member (27) passes through the locking ring (1) and abuts against the positioning ring (8).

7. The pan-tilt quick locking device according to claim 6, wherein the second elastic positioning member (27) is formed by connecting a positioning member body (28) to V-shaped bent portions (29) located at front and rear ends of the positioning member body (28); and portions of the locking ring (1) corresponding to the positions of the V-shaped bent portions (29) at the front and rear ends of the positioning member body (28) are provided with first grooves (32) through which the V-shaped bent portions (29) pass; and
when the pan-tilt connecting member (9) is locked, tips of the V-shaped bent portions (29) pass through the locking ring (1) and abut against the positioning ring (8).

8. The pan-tilt quick locking device according to claim 7, wherein portions of the positioning ring (8) corresponding to the first grooves (32) are provided with second grooves (33), and when the pan-tilt connecting member (9) is locked, the tips of the V-shaped bent portions (29) pass through the locking ring (1) and abut against the corresponding second grooves (33) on the positioning ring (8).

9. The pan-tilt quick locking device according to claim 8, wherein a third groove (34) is further disposed between the two second grooves (33) on the same side; and
when the pan-tilt connecting device is loosened from the locking ring (1), one of the V-shaped bent portions (29) of each said second elastic positioning member (27) abuts against the corresponding third groove (34) on the positioning ring (8), and the other V-shaped bent portion (29) thereof is suspended.

10. The pan-tilt quick locking device according to any one of claims 1 to 9, wherein the pan-tilt quick locking device further comprises a fixing plate (23) disposed above the locking ring (1) and connected to the positioning ring (8); the inner cavity wall of the locking ring (1) is upwardly provided with a first annular surrounding plate (5), and an open slot (6) is disposed at an upper end of the first annular surrounding plate (5); and a lower surface of the fixing plate (23) is provided with a positioning boss (26) which corresponds to the position of the open slot (6) and can slide along the open slot (6).

11. The pan-tilt quick locking device according to claim 10, wherein a pull ring (7) is disposed at a front side and/or a rear side of the locking ring (1), and the locking of the pan-tilt connecting member (9) or the loosening of the pan-tilt connecting member (9) is achieved by pulling the pull ring (7) forward and backward.

12. The pan-tilt quick locking device according to claim 11, wherein the pan-tilt connecting member (9) is provided with a hollow inner cavity, and a rib (12) connected to the positioning ring (8) is extended inward on an inner cavity wall thereof.

## Patentansprüche

1. Schwenk-Neige-Schnellverschlussvorrichtung, umfassend einen Verschlussring (1) und eine Schwenk-Neige-Verbindungsvorrichtung, die dazu in der Lage ist, ein relatives Vor- und Zurückgleiten mit dem Verschlussring (1) entlang einer inneren Kavität des Verschlussrings (1) über einen Gleitschienenmechanismus zu erzeugen, und wobei die Schwenk-Neige-Verbindungsvorrichtung mit Hilfe des relativen Gleitens in der inneren Kavität des Verschlussrings (1) die Schwenk-Neige-Verbindungsvorrichtung verschließt oder die Schwenk-Neige-Verbindungsvorrichtung löst,
**dadurch gekennzeichnet, dass**
die Schwenk-Neige-Verbindungsvorrichtung einen Positionierungsring (8) und ein Schwenk-Neige-Verbindungselement (9) zur Verbindung eines Schwenk-Neige-Kopfs umfasst und sich das Schwenk-Neige-Verbindungselement (9) unter dem Positionierungsring (8) befindet und koaxial mit dem Positionierungsring (8) angeordnet ist; und
der Verschlussring (1) einen ringförmigen Verschlussringkörper (4) umfasst und sich eine obere Fläche des Verschlussringkörpers (4) nach oben entlang einer inneren Kavitätswand erstreckt, um eine erste ringförmige Umgebungsplatte (5) zu bilden.

2. Schwenk-Neige-Schnellverschlussvorrichtung nach Anspruch 1, wobei der Gleitschienenmechanismus eine konkav-konvexe Passstruktur ist, die auf einer äußeren Seitenwand des Schwenk-Neige-Verbindungselements (9) und einer inneren Seitenwand des Verschlussrings (1) angeordnet ist und dazu in der Lage ist, ein relatives Gleiten zu erzeugen.

3. Schwenk-Neige-Schnellverschlussvorrichtung nach Anspruch 1, wobei der Gleitschienenmechanismus mindestens eine erste erhöhte Stange (16) umfasst, die auf der äußeren Seitenwand des Schwenk-Neige-Verbindungselements (9) angeordnet ist, und mindestens eine zweite erhöhte Stange (17), die auf der inneren Seitenwand des Verschlussrings (1) angeordnet ist, und wobei sich die erste erhöhte Stange (16) über der zweiten erhöhten Stange (17) befindet und dazu in der Lage ist, ein relatives Gleiten mit der zweiten erhöhten Stange (17) zu erzeugen.

4. Schwenk-Neige-Schnellverschlussvorrichtung nach Anspruch 3, wobei ein ringförmiger Vorsprung (35), der sich über der ersten erhöhten Stange (16) befindet, an einem unteren Ende einer äußeren Kante des Positionierungsrings (8) angeordnet ist.

5. Schwenk-Neige-Schnellverschlussvorrichtung nach Anspruch 1, wobei die Schwenk-Neige-Schnellverschlussvorrichtung weiter einen Verschlussmechanismus umfasst, der ein erstes Positionierungsloch (18) umfasst, das auf einer Seitenwand des Verschlussrings (1) angeordnet ist, ein erstes elastisches Positionierungselement (19), das sich im ersten Positionierungsloch (18) befindet, und einen Gleitschlitz (20), einen ersten Positionierungsschlitz (21) und einen zweiten Positionierungsschlitz (22), die auf einer Seitenwand des Positionierungsrings (8) in einer relativen Gleitrichtung angeordnet sind, und sich der erste Positionierungsschlitz (21) und der zweite Positionierungsschlitz (22) jeweils an beiden Seiten des Gleitschlitzes (20) befinden; und ein Ende des ersten elastischen Positionierungselements (19) sich in den Gleitschlitz (20) erstreckt und in den ersten Positionierungsschlitz (21) oder den zweiten Positionierungsschlitz (22) entlang dem Gleitschlitz (20) gleiten kann, wodurch das Schwenk-Neige-Verbindungselement (9) verschlossen oder das Schwenk-Neige-Verbindungselement (9) gelöst wird.

6. Schwenk-Neige-Schnellverschlussvorrichtung nach Anspruch 1, wobei die Schwenk-Neige-Schnellverschlussvorrichtung weiter einen Verschlussmechanismus umfasst, der ein zweites elastisches Positionierungselement (27) umfasst, das an die obere Fläche des Verschlussrings (1) befestigt ist, und das zweite Positionierungselement (27) durch den Verschlussring (1) verläuft und gegen den Positionierungsring (8) stößt.

7. Schwenk-Neige-Schnellverschlussvorrichtung nach Anspruch 6, wobei das zweite elastische Positionierungselement (27) durch das Verbinden eines Positionierungselementkörpers (28) an V-förmige gebogene Abschnitte (29) gebildet ist, die sich an vorderen und hinteren Enden des Positionierungelementkörpers (28) befinden; und Abschnitte des Verschlussrings (1), die den Positionen der V-förmig gebogenen Abschnitte (29) an den vorderen und hinteren Enden des Positionierungselementkörpers (28) entsprechen, mit ersten Nuten (32) versehen sind, durch die die V-förmig gebogenen Abschnitte (29) verlaufen; und
wenn das Schwenk-Neige-Verbindungselement (9) geschlossen ist, Spitzen der V-förmig gebogenen Abschnitte (29) durch den Verschlussring (1) verlaufen und an den Positionierungsring (8) stoßen.

8. Schwenk-Neige-Schnellverschlussvorrichtung nach Anspruch 7, wobei Abschnitte des Positionierungsrings (8) die den ersten Nuten (32) entsprechen, mit zweiten Nuten (33) versehen sind, und wenn das Schwenk-Neige-Verbindungselement (9) geschlossen ist, Spitzen der V-förmig gebogenen Abschnitte (29) durch den Verschlussring (1) verlaufen und gegen die entsprechenden zweiten Nuten (33) an dem zweiten Positionierungsring (8) stoßen.

9. Schwenk-Neige-Schnellverschlussvorrichtung nach Anspruch 8, wobei eine dritte Nut (34) weiter zwischen den zwei zweiten Nuten (33) auf der gleichen Seite angeordnet ist; und
wenn die Schwenk-Neige-Verbindungsvorrichtung vom Verschlussring (1) gelöst ist, einer der V-förmig gebogenen Abschnitte (29) jedes der zweiten elastischen Positionierungselemente (27) gegen die entsprechende dritte Nut (34) auf dem Positionierungsring (8) stößt und der andere V-förmig gebogene Abschnitt (29) davon aufgehängt.

10. Schwenk-Neige-Schnellverschlussvorrichtung nach einem der Ansprüche 1 bis 9, wobei die Schwenk-Neige-Schnellverschlussvorrichtung weiter eine Befestigungsplatte (23) umfasst, die über dem Verschlussring (1) angeordnet und mit dem Positionierungsring (8) verbunden ist; die innere Kavitätswand des Verschlussrings (1) nach oben mit einer ersten ringförmigen Umgebungsplatte (5) versehen ist, und ein offener Schlitz (6) an einem oberen Ende der ersten ringförmigen Umgebungsplatte (5) angeordnet ist; und eine unter Fläche der Befestigungsplatte (23) mit einem Positionierungsvorsprung (26) ausgestattet ist, der der Position des offenen Schlitzes (6) entspricht und entlang des offenen Schlitzes (6) gleiten kann.

11. Schwenk-Neige-Schnellverschlussvorrichtung nach Anspruch 10, wobei ein Zugring (7) an einer Vorderseite und/oder einer Hinterseite des Verschlussrings (1) angeordnet ist und der Verschluss des Schwenk-Neige-Verbindungselements (9) oder die Lösung des Schwenk-Neige-Verbindungselements (9) durch Ziehen des Zugrings (7) nach vorne und hinten erzielt wird.

12. Schwenk-Neige-Schnellverschlussvorrichtung nach Anspruch 11, wobei das Schwenk-Neige-Verbindungselement (9) mit einem hohlen inneren Kavität versehen ist und sich eine Rippe, (12), verbunden mit dem Positionierungsring (8) nach innen auf eine Wand der inneren Kavität davon erstreckt.

## Revendications

1. Dispositif de verrouillage rapide panoramique-basculant, comprenant une bague de verrouillage (1) et un dispositif de liaison panoramique-basculant capable de générer un coulissement relatif vers l'avant et vers l'arrière vis-à-vis de la bague de verrouillage (1) le long d'une cavité interne de la bague de verrouillage (1) par l'intermédiaire d'un mécanisme de coulisse, et le dispositif de liaison panoramique-basculant verrouillant le dispositif de liaison panoramique-basculant ou desserrant le dispositif de liaison panoramique-basculant par l'intermédiaire du coulissement relatif dans la cavité interne de la bague de verrouillage (1),
**caractérisé par le fait que**
le dispositif de liaison panoramique-basculant comprend une bague de positionnement (8) et un élément de liaison panoramique-basculant (9) pour relier une tête panoramique-basculante, et l'élément de liaison panoramique-basculant (9) est situé au-dessous de la bague de positionnement (8) et disposé coaxialement à la bague de positionnement (8) ; et
la bague de verrouillage (1) comprend un corps de bague de verrouillage (4) annulaire, et une surface supérieure du corps de bague de verrouillage (4) s'étend vers le haut le long d'une paroi de cavité interne de celui-ci pour former une première plaque périphérique annulaire (5).

2. Dispositif de verrouillage rapide panoramique-basculant selon la revendication 1, dans lequel le mécanisme de coulisse est une structure de couplage concave-convexe qui est disposée sur une paroi latérale externe de l'élément de liaison panoramique-basculant (9) et une paroi latérale interne de la bague de verrouillage (1) et capable de générer un coulissement relatif.

3. Dispositif de verrouillage rapide panoramique-basculant selon la revendication 1, dans lequel le mécanisme de coulisse comprend au moins une première barre en saillie (16) disposée sur la paroi latérale externe de l'élément de liaison panoramique-basculant (9) et au moins une second barre en saillie (17) disposée sur la paroi latérale interne de la bague de verrouillage (1), et la première barre en saillie (16) est située au-dessus de la second barre en saillie (17) et capable de générer un coulissement relatif avec la second barre en saillie (17).

4. Dispositif de verrouillage rapide panoramique-basculant selon la revendication 3, dans lequel un bossage annulaire (35) situé au-dessus de la première barre en saillie (16) est disposé à une extrémité inférieure d'un bord externe de la bague de positionnement (8) .

5. Dispositif de verrouillage rapide panoramique-basculant selon la revendication 1, dans lequel le dispositif de verrouillage rapide panoramique-basculant comprend en outre un mécanisme de verrouillage qui comprend un premier trou de positionnement (18) disposé sur une paroi latérale de la bague de verrouillage (1), un premier élément de positionnement élastique (19) situé dans le premier trou de positionnement (18), et une fente de coulissement (20), une première fente de positionnement (21) et une seconde fente de positionnement (22) disposées sur une paroi latérale de la bague de positionnement (8) dans une direction de coulissement relatif, et la première fente de positionnement (21) et la seconde fente de positionnement (22) sont respectivement situées des deux côtés de la fente de coulissement (20) ; et une extrémité du premier élément de positionnement élastique (19) s'étend dans la fente de coulissement (20), et peut coulisser dans la première fente de positionnement (21) ou la seconde fente de positionnement (22) le long de la fente de coulissement (20), verrouillant ainsi l'élément de liaison panoramique-basculant (9) ou desserrant l'élément de liaison panoramique-basculant (9).

6. Dispositif de verrouillage rapide panoramique-basculant selon la revendication 1, dans lequel le dispositif de verrouillage rapide panoramique-basculant comprend en outre un mécanisme de verrouillage qui comprend un second élément de positionnement élastique (27) fixé à la surface supérieure de la bague de verrouillage (1), et le second élément de positionnement élastique (27) passe à travers la bague de verrouillage (1) et vient en butée contre la bague de positionnement (8).

7. Dispositif de verrouillage rapide panoramique-basculant selon la revendication 6, dans lequel le second élément de positionnement élastique (27) est formé par liaison d'un corps d'élément de positionnement (28) à des parties pliées en forme de V (29) situées à des extrémités avant et arrière du corps d'élément de positionnement (28) ; et des parties de la bague de verrouillage (1) correspondant aux positions des parties pliées en forme de V (29) aux extrémités avant et arrière du corps d'élément de positionnement (28) comportent des premières rainures (32) à travers lesquelles les parties pliées en forme de V (29) passent ; et
lorsque l'élément de liaison panoramique-basculant (9) est verrouillé, des pointes des parties pliées en forme de V (29) passent à travers la bague de verrouillage (1) et viennent en butée contre la bague de positionnement (8).

8. Dispositif de verrouillage rapide panoramique-basculant selon la revendication 7, dans lequel des parties de la bague de positionnement (8) correspondant aux premières rainures (32) comportent des deuxièmes rainures (33), et lorsque l'élément de liaison panoramique-basculant (9) est verrouillé, les pointes des parties pliées en forme de V (29) passent à travers la bague de verrouillage (1) et viennent en butée contre les deuxièmes rainures correspondantes (33) sur la bague de positionnement (8).

9. Dispositif de verrouillage rapide panoramique-basculant selon la revendication 8, dans lequel une troisième rainure (34) est en outre disposée entre les deux deuxièmes rainures (33) sur le même côté ; et
lorsque le dispositif de liaison panoramique-basculant est desserré de la bague de verrouillage (1), l'une des parties pliées en forme de V (29) de chaque second élément de positionnement élastique (27) précité vient en butée contre la troisième rainure correspondante (34) sur la bague de positionnement (8), et l'autre partie pliée en forme de V (29) de celui-ci est en suspension.

10. Dispositif de verrouillage rapide panoramique-basculant selon l'une quelconque des revendications 1 à 9, dans lequel le dispositif de verrouillage rapide panoramique-basculant comprend en outre une plaque de fixation (23) disposée au-dessus de la bague de verrouillage (1) et reliée à la bague de positionnement (8) ; la paroi de cavité interne de la bague de verrouillage (1) comporte, vers le haut, une première plaque périphérique annulaire (5), et une fente ouverte (6) est disposée à une extrémité supérieure de la première plaque périphérique annulaire (5) ; et une surface inférieure de la plaque de fixation (23) comporte un bossage de positionnement (26) qui correspond à la position de la fente ouverte (6) et peut coulisser le long de la fente ouverte (6).

11. Dispositif de verrouillage rapide panoramique-basculant selon la revendication 10, dans lequel une bague de traction (7) est disposée sur un côté avant et/ou un côté arrière de la bague de verrouillage (1), et le verrouillage de l'élément de liaison panoramique-basculant (9) ou le desserrage de l'élément de liaison panoramique-basculant (9) est réalisé par traction sur la bague de traction (7) vers l'avant et vers l'arrière.

12. Dispositif de verrouillage rapide panoramique-basculant selon la revendication 11, dans lequel l'élément de liaison panoramique-basculant (9) comporte une cavité interne creuse, et une nervure (12) reliée à la bague de positionnement (8) s'étend vers l'intérieur sur une paroi de cavité interne de celle-ci.
